# NEUE EUROPÄISCHE PATENTSCHRIFT

(11) **EP 3 078 475 B2**
(45) Veröffentlichungstag und Bekanntmachung des Hinweises auf die Entscheidung über den Einspruch: **22.01.2025**
(45) Hinweis auf die Patenterteilung: 30.01.2019
(21) Anmeldenummer: 15162674.4
(22) Anmeldetag: 07.04.2015
(51) Int. Cl.: B29C 45/14, B29K 701/12, B29K 101/12

(54) **HERSTELLUNGSVERFAHREN EINES MIT EINEM VERSTÄRKUNGSELEMENT VERSTÄRKTEN FORMKÖRPERS**
MOLDED ARTICLE REINFORCED WITH A REINFORCING ELEMENT, METHOD FOR ITS PREPARATION AND ITS USE
CORPS DE MOULAGE RENFORCÉ PAR UN ÉLÉMENT DE RENFORT, SON PROCÉDÉ DE FABRICATION ET D'UTILISATION

(43) Veröffentlichungstag der Anmeldung: 12.10.2016
(73) Patentinhaber: EMS-CHEMIE AG, 7013 Domat/Ems (CH)
(72) Erfinder: Weis, Simon Bernhard, 7013 Domat/Ems (CH); Kruse, Christian, 9477 Trübbach (CH); Loch, Peter, 8890 Flums (CH)
(74) Vertreter: Pfenning, Meinig & Partner mbB

(56) Entgegenhaltungen:
- EP-A1- 0 872 521
- EP-A1- 2 626 185
- EP-A1- 2 669 082
- EP-A1- 2 725 055
- WO-A1-2007/008569
- WO-A1-2007/082677
- WO-A1-2008/085312
- WO-A1-2010/139077
- WO-A1-2012/058345
- WO-A1-2013/085723
- WO-A1-2014/118210
- CA-A- 1 127 469
- DE-T2- 3 878 672
- GB-A- 884 468
- JP-A- 2006 044 259
- JP-A- 2008 231 291
- JP-A- S5 658 824
- US-A1- 2003 124 952
- US-A1- 2015 069 657

## Beschreibung

Die Erfindung betrifft ein Verfahren zur Herstellung eines mit mindestens einem Verstärkungselement verstärkten Formkörpers mittels Spritzgießen. Hierbei wird das Verstärkungselement stoffschlüssig mit der Spritzgusswerkzeugwand verbunden, so dass beim anschließenden Spritzgießen der Polymermatrix das Verstärkungselement im Werkzeug fixiert ist. Weiterhin werden Formkörper offenbart, die nach diesem Verfahren herstellbar sind. Verwendung finden die Formkörper bei der Herstellung von Automobilteilen, Industrie- und Konsumgüter sowie Sportgeräten.

Auf Grund des Bestrebens Metalle durch Kunststoffe zu ersetzen, werden an deren mechanische Eigenschaften immer höhere Anforderungen gestellt. Eine gängige Vorgehensweise zum Verbessern der mechanischen Eigenschaften besteht im Einbringen von faserförmigen Verstärkungsstoffen, wie z.B. Glas- oder Kohlenstofffasern, in die Kunststoffmatrix. Bauteile aus einem derart verstärkten Kunststoff weisen jedoch oft deutlich geringere Steifigkeiten als Metallbauteile auf.

Eine weitere Verbesserung lässt sich durch selektive Verstärkung der Formkörper mit Faserbändchen erreichen. Dies gelingt z.B. durch das gezielte Auf- oder Einbringen dieser Faserbändchen an bzw. in den Formkörper. Eine der wichtigsten Methoden zum Herstellen von Kunststoff-Formkörpern stellt der Spritzgussprozess dar. Aus ökonomischen Gründen ist es wünschenswert das oder die Faserbändchen bereits im Spritzgussprozess in den Formkörper ein- oder an diesen anzubringen und keinen separaten Schritt nachzuschalten.

Hierbei tritt aber insbesondere das Problem der zuverlässigen und reproduzierbaren Fixierung der Faserbändchen im Spritzgusswerkzeug auf. Für die Fixierung der Faserbändchen im Spritzgusswerkzeug sind aus dem Stand der Technik verschiedene Wege vorbeschrieben.

Aus der DE 10 2011 077 834 A1 ist ein Verfahren zur Herstellung eines Faserverbundstrukturteils durch Spritzgießen oder Spritzpressen bekannt. Dabei wird ein vorgefertigtes Halbzeug in ein Spritzgusswerkzeug eingelegt und nach dem Schließen des Werkzeugs ein faserverstärkter Kunststoff eingespritzt. Die sichere Lage des Halbzeugs im Werkzeug wird dabei durch Spannelemente gewährleistet.

Ein anderes Verfahren zur Herstellung von partiell mit Endlosfasern verstärkten Spritzgussbauteilen beschreibt die DE 10 2007 037 680 A1. Hier kommt eine spezielle Werkzeugform zur Anwendung, die das Einfahren von Nadeln in die Werkzeugform gestattet. Mit diesen Nadeln wird ein Endlosfaserhalbzeug vor dem Einspritzen eines thermoplastischen Kunststoffs in der Werkzeugform positioniert. Nach dem Einspritzen werden die Nadeln zurückgefahren.

Die DE 10 2011 120 986 A1 beschreibt ein Spritzgussverfahren zur Fertigung eines Faserverbund-Hohlprofilbauteils mit angespritzten Form- und/oder Funktionsstrukturen. Hierbei wird zunächst in einem ersten Werkzeug ein Kern gegossen, welcher dann mit einem in einen Duroplasten getränkten Fasermaterial umwickelt wird. In einem zweiten Werkzeug wird dieser umwickelte Kern zumindest teilweise gehärtet und Funktions- oder Formstrukturen angespritzt. Nach Entformen des Hohlprofils wird der Kern zumindest auf seine Schmelzetemperatur erwärmt und aus dem Hohlprofil ausgeschmolzen.

GB 884 468 A betrifft bedruckte Plastik-, Papier- oder Stofffolien, die an einen Kunststoffgegenstand gebunden sind, z.B. einen Bilderrahmen oder eine Kiste. Dabei wird die Folie vorübergehend in einer Spritzgussform mittels eines Klebstoffs oder einer Saugvorrichtung gehalten und dann Material in diese, um sie oder darauf eingespritzt.

US 2003/124952 A1 beschreibt ein Verfahren zum Umspritzen eines vorgeformten Gegenstands in ein geformtes Produkt, wobei das geformte Produkt durch Einspritzen eines formbaren Materials in eine Form geformt wird. Das Verfahren umfasst das Anhaften des vorgeformten Gegenstands an einer Oberfläche der Form mit einem Klebstoff, wobei die Oberfläche, an der der vorgeformte Gegenstand haftet, frei von jeglichen Merkmalen ist, die zum Halten des vorgeformten Gegenstands an Ort und Stelle auf der Formoberfläche vorgesehen sind. Das Verfahren schließt weiterhin das Einspritzen des formbaren Materials in die Form ein, so dass das formbare Material den vorgeformten Gegenstand zumindest teilweise umgibt und das Aushärten des formbaren Materials.

JP S56 58824 A beschreibt ein Verfahren zum Einsetzen eines dekorativen Elements in einen spritzgegossenen Gegenstand, ohne eine Position eines Spritzgussmaterials zu verschieben. Das dekorative Element haftet mit einer darauf gebildeten Haftschicht in einer Metallform an und ein Harz oder dergleichen wird in die Metallform eingespritzt, um ein einstückiges Formteil auszubilden. Anschließend wird die Haftschicht entfernt.

EP 2 626 185 A1 betrifft Verfahren zum Herstellen eines Kunststoffartikels durch Spritzgießen, unter Verwendung eines Spritzgießwerkzeugs mit einer ersten Werkzeughälfte und einer zweiten Werkzeughälfte, die zwischen sich eine Kavität bilden und zum Öffnen und Schließen des Spritzgießwerkzeugs auseinandergefahren und zusammengefahren werden können, wobei eine Kunststoffschmelze in die Kavität des geschlossenen Spritzgießwerkzeugs eingespritzt wird, dort erstarrt und der hierdurch entstandene Kunststoffartikel durch Öffnen des Spritzgießwerkzeugs entformt wird, wobei vor dem Einspritzen der Kunststoffschmelze in das Spritzgießwerkzeug ein flächiges Dekormaterial mit einer Rückseite und einer Sichtseite solcherart an einer die Kavität bildenden Werkzeughälften des geöffneten Spritzgießwerkzeugs angebracht wird, dass es sich, nach dem Schließen des Spritzgießwerkzeugs, beim Einspritzen der Kunststoffschmelze und/oder beim Erstarren der Kunststoffschmelze an seiner Rückseite stoffschlüssig mit dem Kunststoff verbindet um danach mit seiner Sichtseite zumindest einen Teil einer Oberfläche des Kunststoffartikels zu bilden, dadurch gekennzeichnet, dass das flächige Dekormaterial punktuell, bereichsweise oder ganzflächig mit einem Adhäsivstoff versehen wird und mittels des Adhäsivstoffs an einer die Kavität bildenden Werkzeughälfte des geöffneten Spritzgießwerkzeugs fixiert wird.

WO 2010/139077 A1 beschreibt ein Verfahren zur Herstellung eines Verbundmaterials, umfassend A. eine Kernschicht (K), die mindestens 20 Vol.-% Lufthohlräume enthält und aus mit statistisch orientierten Fasern verstärktem Thermoplast besteht, und B. Verstärkungsstreifen (V) aus kontinuierlichen, parallelen, unidirektionalen Verstärkungsfasern, die entweder einseitig oder beidseitig in die Oberfläche der Kernschicht eingeprägt sind. Die Kernschicht wird auf Temperaturen oberhalb des Erweichungsbereiches des thermoplastischen Materials erhitzt. Danach werden mehrere einzelne Faserbündel, die in einem Abstand voneinander auf die Oberfläche der Kernschicht aufgebracht wurden, in diese Oberfläche eingedrückt.

Ausgehend hiervon war es Aufgabe der vorliegenden Erfindung, ein Verfahren zur Herstellung von verstärkten Formkörpern bereitzustellen, das eine exakte Fixierung des Verstärkungselements erlaubt und somit Formkörper mit guten mechanischen Eigenschaften ermöglicht. Unter exakter Fixierung wird verstanden, dass das Verstärkungselement durch den Spritzgussprozess nicht weiter als 2mm, bevorzugt nicht weiter als 1mm aus seiner Ausgangslage verschoben wird. Weiterhin ist es Aufgabe der Erfindung die exakte Fixierung des Verstärkungselements ohne den Aufwand von Werkzeugmodifikationen oder von Fixiereinlagen wie sie im Stand der Technik beschrieben sind, zu realisieren.

Diese Aufgabe wird durch das Verfahren zur Herstellung eines verstärkten Formkörpers mit den Merkmalen des Anspruchs 1 gelöst. Die weiteren abhängigen Ansprüche führen weitere vorteilhafte Ausführungen auf.

Erfindungsgemäß wird ein Verfahren zur Herstellung eines mit mindestens einem Faserbändchen verstärkten Formkörpers bereitgestellt, das folgende Schritte aufweist:
a) Imprägnierung eines endlosen, flachen Rovings mit einer Schmelze eines ersten thermoplastischen Polymers zu einem Faserbändchen,
b) Bereichsweise Aufbringung mindestens eines Klebemittels auf dem Faserbändchen mit anschließendem Schmelzen des mindestens einen Klebemittels,
c) Erkalten und Aushärten des Faserbändchens,
d) Aufheizen eines Spritzgusswerkzeugs auf eine Temperatur, die nicht niedriger als 20 K unterhalb des Schmelzpunktes des Klebemittels liegt,
e) Einbringen des mindestens einen Faserbändchens in das Spritzgusswerkzeug, wobei zumindest ein Teil der mit Klebemittel beschichteten Bereiche des Faserbändchens mit mindestens einer temperierten Spritzgusswerkzeugwand in Kontakt gebracht werden,
f) Spritzgießen eines zweiten thermoplastischen Polymers in das Werkzeug,
g) Entnahme des mit mindestens einem Faserbändchen verstärkten Formkörpers aus der Spritzgussform,
wobei das Faserbändchen als Verstärkungselement stoffschlüssig mit der Spritzgusswerkzeugwand verbunden wird, so dass beim anschließenden Spritzgießen der Polymermatrix das Verstärkungselement im Werkzeug fixiert ist.

Das Faserbändchen dient erfindungsgemäß als Verstärkungselement für den Formkörper.

Dabei ist es bevorzugt, dass das bei der Imprägnierung in Schritt a) eingesetzte erste thermoplastische Polymer ausgewählt ist aus der Gruppe bestehend aus Polyamiden, Polyolefinen, Polyacrylaten, Polycarbonaten, Polysulfonen, Polyimiden, Polyestern, Polyethern, Polystyrolen, oder Mischungen aus einem oder mehreren der aufgezählten Polymere.

Es ist zudem bevorzugt, dass das zweite thermoplastische Polymer in Schritt f) ausgewählt ist aus der Gruppe bestehend aus Polyamiden, Polyolefinen, Polyacrylaten, Polycarbonaten, Polysulfonen, Polyimiden, Polyestern, Polyethern, Polystyrolen oder Mischungen aus einem oder mehreren der aufgezählten Polymere.

Bevorzugt enthält das für die Imprägnierung eingesetzte erste thermoplastische Polymer und/oder das für die Umspritzung eingesetzte zweite thermoplastische Polymer Zusatzstoffe. Diese sind vorzugsweise ausgewählt aus der Gruppe bestehend aus anorganischen Stabilisatoren, organischen Stabilisatoren, Gleitmitteln, Entschäumern, kettenverlängernden Additiven, Kondensationskatalysatoren, optischen Aufhellern, Weichmachern, Haftvermittlern, halogenhaltigen Flammschutzmitteln, halogenfreien Flammschutzmitteln, Schlagzähmodifikatoren, teilchenförmigen Füllstoffen -, Farbstoffen, Pigmenten und/oder deren Mischungen.

Bei den Zusatzstoffen sind faserförmige Füllstoffe ausgeschlossen.

Das zweite thermoplastische Polymer ist in einer bevorzugten Ausführungsform faserverstärkt, vorzugsweise ist es mit Kohlenstoff- oder Glasfasern mit flachem oder rundem Querschnitt verstärkt. Hierbei sind Fasern mit einer Länge von 0,1 bis 50 mm und einem Durchmesser von 5 bis 40 µm bevorzugt. Der Anteil an Verstärkungsstoffen beträgt für Kohlenstofffasern von 3 bis 50 Gew.-%, bevorzugt 5 bis 40 Gew.-% und für Glasfasern 5 bis 75 Gew.-%, bevorzugt von 15 bis 65 Gew.-% und insbesondere bevorzugt von 30 bis 50 Gew.-%, jeweils bezogen auf die Gesamtmasse der zweiten Kunststoffmatrix und der optional vorhandenen weiteren Zusatzstoffe.

Es ist aber auch möglich, das zweite thermoplastische Polymer unverstärkt zu verwenden.

Der Anteil der Zusatzstoffe beträgt bevorzugt 0,1 bis 20 Gew.-% und insbesondere bevorzugt 0,5 bis 10 Gew.-% bezogen auf die Gesamtmasse des ersten und/oder zweiten Polymers.

Bei dem für die Imprägnierung eingesetzten ersten thermoplastischem Polymeren und/oder bei dem für die Umspritzung eingesetzten zweiten thermoplastischem Polymeren kann es sich jeweils um amorphe oder teilkristalline Polymere handeln. Diese Polymere weisen eine Glasübergangstemperatur gemessen nach ISO 11357 Methode "Half-step-height" im Bereich von 30 bis 350°C, bevorzugt im Bereich von 35 bis 230°C, besonders bevorzugt im Bereich von 40 bis 200°C auf.

Amorphe Polymere zeigen in der dynamischen Differenz-Kalorimetrie (engl. Differential Scanning Calorimetry, DSC) nach ISO 11357 bei einer Aufheizrate von 20 K/min eine Schmelzwärme von maximal 5 J/g, bevorzugt von maximal 3 J/g, besonders bevorzugt von 0 bis 1 J/g.

Amorphe Polymere zeigen aufgrund ihrer Amorphizität keinen Schmelzpunkt.

Handelt es sich bei dem für die Imprägnierung eingesetzten erstem thermoplastischem Polymeren und/oder bei dem für die Umspritzung eingesetzten zweitem thermoplastischem Polymeren um ein teilkristallines Polymer weist es einen Schmelzpunkt gemessen nach ISO 11357 mit Angabe des Peakmaximums als Schmelzpunkt von 50 bis 420°C, bevorzugt von 100 bis 350°C und besonders bevorzugt von 170 bis 300°C auf.

Als thermoplastisches erstes und/oder zweites Polymer werden bevorzugt Polyamide verwendet. Die Polyamide werden dabei bevorzugt aus aliphatischen oder cycloaliphatischen Diaminen und aromatischen oder aliphatischen Dicarbonsäuren und/oder aus Lactamen erhalten. Besonders bevorzugt werden Homo- und Co-Polyamide gebildet aus cycloaliphatischen C6-C17-Diaminen und/oder aliphatischen C4-C12-Diaminen mit aliphatischen C4-C20-Dicarbonsäuren und/oder aromatischen Dicarbonsäuren und/oder Lactamen verwendet. Besonders bevorzugt für die Dicarbonsäuren sind Bernsteinsäure, Glutarsäure, Adipinsäure, Pimelinsäure, Korksäure, Azelainsäure, Sebazinsäure, Undecandisäure, Dodecandisäure, Brassylsäure, Tetradecandisäure, 1,3- und 1,4-Cyclohexandicarbonsäure, Eicosandisäure, Naphthalindicarbonsäure, Terephthalsäure und Isophthalsäure.

Bevorzugt sind auch Polyamide, die gebildet sind aus den vorgenannten Diaminen und Dicarbonsäuren und/oder Lactamen mit 4 bis 15 C-Atomen und/oder α,ω-Aminosäuren mit 4 bis 15 C-Atomen. Besonders bevorzugt für die Diamine sind Hexamethylendiamin, Heptamethylendiamin, Octamethylendiamin, Nonamethylendiamin, Decamethylendiamin, Undecamethylendiamin, Dodecamethylendiamin, Trimethylhexamethylendiamin, 2-Methyl-1,5-pentandiamin, Isophorondiamin, Norbornandiamin, 1,3-Bis(aminomethyl)cyclohexan, MACM, MXD, PACM, PXD und TMACM (MACM steht für 3,3'-Dimethyl-4,4'-diaminocyclohexylmethan, MXD steht für meta-Xylylendiamin, PACM steht für 4,4'-Diaminocyclohexylmethan, PXD steht für para-Xylylendiamin und TMACM steht für 3,3',5,5'-Tetramethyl-4,4'diamino-cyclohexylmethan).

Weiterhin bevorzugt sind Polyamide aus meta-Xylylendiamin und/oder Hexamethylendiamin und Terephthalsäure und/oder Isophthalsäure.

Bevorzugte amorphe Polyamide sind ausgewählt aus der Gruppe bestehend aus PA 6I, PA 6I/6T, PA 6I/6T/6N, PA MXDI/6I, PA MXDI/XDT/6I/6T, PA MXDI/12I, PA MXDI, PA MACM10, PA MACM12, PA MACM14, PA MACM18, PA NDT/INDT, PA TMDC12, PA MACMI/12, PA MACMT/12, PA MACMI/MACM12, PA MACMT/MACM12, PA MACMI/MACMN, PA MACMT/MACMN, PA MACMI/MACM36, PA MACMT/MACM36, PA MACMI/MACMT/12, PA 6I/MACMI/12, PA 6I/6T/MACMI/MACMT, PA 6I/6T/MACMI/MACMT/12, PA MACM6/11, PA 6I/6T/MACMI/MACMT/MACM12/612, PA MACMI/MACMT/MACM12/12, PA MACMI/MACMT/MACM12, PA 6I/6T/6N/MACMI/MACMT/MACMN, PA MACM10/10 und Mischungen oder Copolymere hiervon, wobei das MACM bis zu maximal 25 Mol-%, bezogen auf die Summe der molaren Anteile aller Monomere von 100 Mol-%, durch PACM und/oder das Laurinlactam ganz oder teilweise durch Caprolactam ersetzt sein kann.

Besonders bevorzugt wird das amorphe Polyamid ausgewählt aus der Gruppe bestehend aus PA MACM12, PA MACM14, PA MACM12/PACM12, PA MACMI/12, PA MACMI/MACMT/12, PA 6I/6T/MACMI/MACMT/12, PA 6I/6T/MACMI/MACMT/PACMI/PACMT/12, PA MACMI/MACMT/MACM12 und Mischungen hiervon.

Weiterhin bevorzugt sind teilkristalline Polyamide ausgewählt aus der Gruppe bestehend aus PA 6, PA 66, PA 69, PA 610, PA 612, PA 11, PA 12, PA 1010, PA 1012, PA 1210, PA 1212, PA PACM12, PA 6/PACMT und Mischungen daraus. Besonders bevorzugt sind PA 12, PA PACM12 oder Mischungen aus PA 66 und PA 6I/6T, wobei das PA 6I/6T das Gewichtsverhältnis 67/33 besitzt.

Die verwendeten Schreibweisen und Abkürzungen für Polyamide und deren Monomere entsprechen der ISO-Norm 1874-1:1992. Die Schreibweise PA NDT/INDT beispielsweise steht für ein Polyamid gebildet aus 2,2,4-Trimethylhexamethylendiamin, 2,4,4-Trimethylhexamethylendiamin und Terephthalsäure.

Eine weitere bevorzugte Ausführungsform sieht vor, dass das für die Imprägnierung eingesetzte erste Polymer gleich dem für die Umspritzung eingesetztem zweiten Polymer ist, wobei sich jedoch die Zusatzstoffe in Art und Menge unterscheiden können.

Der Roving besteht aus Endlosfasern, auch Filamente genannt, in unidirektionaler Anordnung, insbesondere Kohlenstoff-, Natur-, Glas-, Mineral- oder Aramidfasern, bevorzugt Kohlenstofffasern oder Glasfasern mit flachem oder rundem Querschnitt des einzelnen Filamentes und besonders bevorzugt Kohlenstofffasern. Bei der Verarbeitung des Rovings, d.h. der Führung des Rovings durch eine Spreizvorrichtung, werden die Filamente flächig angeordnet, so dass ein flacher Roving resultiert, der imprägniert wird und das Faserbändchen ergibt.

Nach der Imprägnierung des flachen Rovings durch das erste thermoplastische Polymer, beträgt der Anteil an Fasern im Faserbändchen vorzugsweise 1 bis 65 Gew.%, besonders bevorzugt 5 bis 50 Gew.-% und insbesondere bevorzugt 10 bis 40 Gew.-% bezogen auf die Gesamtmasse des Faserbändchens.

Die Imprägnierung des flachen Rovings in Schritt a) erfolgt in der Gestalt, dass der als Endlosband vorliegende flache Roving durch eine erwärmte Imprägnierstation gezogen wird, in der das erwärmte und schmelzflüssige erste thermoplastische Polymer zugeführt wird. Am Ende der Imprägnierung wird der imprägnierte flache Roving durch eine rechteckige Düse geführt.

Eine bevorzugte Ausführungsform sieht vor, dass das Aufbringen des mindestens einen Klebemittels in Schritt b) durch Aufstreuen als Pulver oder durch Aufbringen einer Suspension oder durch Aufwalzen einer Folie oder eines Fadens durchgeführt wird. Erfolgt das Aufbringen des Klebemittels durch Aufstreuen als Pulver so sind Pulverkörnungen mit Korngrößenbereichen von 80 µm bis 500 µm bevorzugt, besonders bevorzugt sind 100 µm bis 200 µm.

Die Bedeckung, Schichtdicke, Morphologie und das Adhäsionsvermögen des mindestens einen Klebemittels kann durch die aufgetragene Menge des Klebemittels eingestellt werden. Die Menge des Klebemittels liegt dabei vorzugsweise im Bereich von 10 bis 50 g/m², besonders bevorzugt von 15 bis 30g/m².

Es ist ebenso möglich, dass das mindestens eine Klebemittel die Oberfläche des Faserbändchens, teilweise oder vollständig, an diskreten Punkten oder in geometrischen Mustern wie Streifen, Rechtecken, Rauten, Kreisen, Ovale oder in Arealen in statistischer Verteilung bedeckt. Dies kann z.B. mit strukturierten Umformwalzen, mit einer diskontinuierlichen Dosierung oder mit unterschiedlichen Siebeinsätzen zwischen Dosierung und Faserbändchen realisiert werden.

In einer bevorzugten Ausführung wird das Klebemittel nur einseitig auf dem Faserbändchen aufgebracht. In einer weiteren bevorzugten Ausführungsform ist das Klebemittel an mindestens einer Oberfläche, z.B. an zwei, drei oder vier Oberflächen, aufgebracht.

In einer bevorzugten Ausführung wird das Klebemittel dem Faserbändchen so zugeführt, dass das Klebemittel durch die von der Imprägnierstation vorhandene Erwärmung des Faserbändchens aufgeschmolzen werden kann.

In einer weiteren bevorzugten Ausführung ist es auch möglich, dass das Aufschmelzen des Klebemittels mit einer zusätzlichen thermischen Behandlung herbeigeführt oder unterstützt wird. Die thermische Behandlung des Faserbändchens kann vorzugsweise mittels Heißluft, Heißgas, insbesondere Stickstoff, Ultraschall, Laser und/oder Bestrahlung erfolgen. Hierbei ist eine Infrarot-Bestrahlung bevorzugt.

Weiterhin ist es bevorzugt, dass das Klebemittel eine Klebewirkung erst bei Erwärmung auf nicht niedriger als 20K unterhalb des Schmelztemperaturbereichs des Klebemittels, bevorzugt erst bei Erwärmung auf eine Temperatur innerhalb des Schmelztemperaturbereichs entfaltet.

Vorzugsweise ist das mindestens eine Klebemittel ausgewählt aus der Gruppe der Copolyamide oder Copolyester. Hierzu zählen insbesondere Copolyamide die einen Schmelzpunkt gemessen nach ISO 11357 mit Angabe des Peakmaximums als Schmelzpunkt im Bereich von 70 °C bis 160 °C, bevorzugt von 90 °C bis 140 °C aufweisen und Copolyester, die einen Schmelzpunkt gemessen nach ISO 11357 mit Angabe des Peakmaximums als Schmelzpunkt im Bereich von 80 °C bis 180 °C, bevorzugt von 100 °C bis 160 °C aufweisen.

Die als Klebemittel eingesetzten Copolyamide weisen bevorzugt eine Schmelzviskosität nach ISO 1133 bei 160 °C und einer Belastung von 2,16 kg von 50 bis 3000 Pa*s, bevorzugt 200 bis 2000 Pa*s auf. Die als Klebemittel eingesetzten Copolyester weisen bevorzugt eine Schmelzviskosität nach ISO 1133 bei 160 °C und einer Belastung von 2,16 kg von 50 bis 1500 Pa*s, bevorzugt 100 bis 1000 Pa*s auf.

Bevorzugt werden die für das Klebemittel eingesetzten Copolyamide gebildet aus 20 bis 80 mol-% Caprolactam, 0 bis 60 mol-% Laurinlactam, 10 bis 60 mol-% aliphatischen Dicarbonsäuren, 0 bis 30 mol-% aromatischen Dicarbonsäuren und mindestens einem Diamin, wobei sich die Summe von Caprolactam, Laurinlactam, aliphatischer und aromatischer Dicarbonsäure zu 100 mol-% ergänzt und wobei das mindestens eine Diamin in equivalenter molarer Menge zur Summe der Dicarbonsäuren eingesetzt wird.

Bevorzugt werden die für das Klebemittel eingesetzten Copolyester gebildet aus 55 bis 95 mol-% aromatischen Dicarbonsäuren, 5 bis 45 mol-% aliphatische Dicarbonsäuren und 100 mol-% mindestens eines aliphatischen Diols, wobei sich die molaren Anteile der Dicarbonsäuren zu 100 mol-% addieren .

Das Klebemittel kann eines oder mehrere der für das erste und/oder zweite Polymer benannten Zusatzstoffe enthalten.

In einer bevorzugten Ausführungsform des Verfahrens zur Herstellung eines mit mindestens einem Faserbändchen als Verstärkungselement verstärkten Formkörpers erfolgt vor oder nach Schritt b) eine Umformung des Faserbändchens mittels eines Umformrollenpaares oder einer Nachformdüse, um die nach Schritt a) vorliegende Dicke des Faserbändchens reduzieren zu können. Durch diese zusätzliche Umformung sind besonders dünne Faserbändchen herstellbar, d.h. Faserbändchen mit einer Dicke kleiner als 0,25 mm. Bei der Umformung mittels eines Umformrollenpaares, sind die Formrollen vertikal in einer Achse übereinander angeordnet. Die untere Formrolle ist fix auf einer Welle, welche drehbar gelagert ist, montiert. Die obere Formrolle ist drehbar auf einer Welle gelagert. Mit einem pneumatischen Zylinder kann die obere Umformrolle mit einem definierten Druck (0 -10 bar) auf die untere Umformrolle gepresst werden. Damit das Faserbändchen zwischen den Umformrollen gehalten wird, sind auf der unteren Welle zwei mitlaufende, parallel zur unteren Umformrolle angebrachte Führungsrollen, die eine seitliche Führung der Umformrollen bzw. des Faserbändchens gewährleisten. Bei der Umformung mittels einer Nachformdüse ist diese beheizt und weist die gleichen Dimensionen wie das herzustellende Faserbändchen auf.

Nach dem Erkalten und Aushärten des Faserbändchens weist dieses eine Dicke von 0,02 bis 5 mm, bevorzugt 0,15 bis 4 mm, besonders bevorzugt 0,2 bis 2 mm, ganz besonders bevorzugt 0,25 bis 1,0 mm auf. Die Breite der Faserbändchen beträgt vorzugsweise von 1 bis 40 mm, bevorzugt von 2 bis 30 mm und besonders bevorzugt von 5 bis 20 mm.

Weiterhin ist es bevorzugt, dass nach dem Erkalten und Aushärten des Faserbändchens dieses in Teilstücke trennbar ist. Dies kann insbesondere durch Schneiden, Laserbehandlung, Quetschen, Sägen, Wasserstrahlen, Knicken oder Kombinationen dieser Maßnahmen erfolgen.

Bei einer weiteren Ausführung ist es aber auch möglich, zunächst keinen Trennschritt durchzuführen und das Faserbändchen nach Erkalten und Aushärten als Endlosband auf einer Spule aufzuwickeln. In diesem Fall erfolgt die Teilung des Endlosbandes in für den zu verstärkenden Formkörper geeignete Längen in einem weiteren Schritt.

Eine weitere bevorzugte Ausführungsform sieht vor, dass das als Endlosband vorliegende Faserbändchen kontinuierlich einem Spritzgusswerkzeug zugeführt wird, wobei das Faserbändchen bereichsweise in Spritzgusswerkzeug eingebracht wird und die Teilung des Endlosbandes erst nach dem Spritzgussvorgang erfolgt.

Das Einbringen des Faserbändchens in das Spritzgusswerkzeug kann sowohl manuell als auch automatisiert durchgeführt werden. Hierfür können Handlingsysteme mit Greifer, Vakuumdüsen oder Pins verwendet werden. Das Handlingsystem kann automatisiert und /oder computergesteuert geregelt sein.

Eine weitere bevorzugte Ausführungsform sieht vor, dass in Schritt d) das Spritzgusswerkzeug auf eine Temperatur erwärmt wird, die nicht niedriger als 20K unterhalb des Schmelzpunkts des Klebemittels liegt, insbesondere bei 50 bis 200 °C, bevorzugt bei 70 bis 180 °C, besonders bevorzugt bei 90 bis 160 °C. Hierbei ist die Kombination aus Klebemittel und zweitem thermoplastischen Polymer so zu wählen, dass sie bei den genannten Werkzeugtemperaturen verarbeitbar ist.

Dabei kann in Schritt e) das mindestens eine Faserbändchen vorzugsweise unter Anlegen eines Drucks von 5 bis 30 N/cm², bevorzugt von 10 bis 20 N/cm² mit der mindestens einen temperierten Spritzgusswerkzeugwand in Kontakt gebracht werden.

Die Klebung des Faserbändchens erfolgt bevorzugt auf eine Werkzeugwand ohne Strukturierung. Es ist aber auch möglich der Werkzeugwand an den Bereichen, wo die Klebung erfolgt eine Oberflächenstrukturierung in Mustern von Vertiefungen in Form von Rillen, Nuten, Dellen, Pyramiden oder Ähnlichem zu geben.

In einer weiteren Ausführung kann zwischen dem Imprägnierschritt a) und dem Aufbringen des Klebemittels in Schritt b) ein weiterer Schritt vorgesehen werden, in dem mindesten 2 Faserbändchen zu einem Laminat verbunden werden. Das Auftragen des Klebemittels in Schritt b) erfolgt dabei auf mindestens einer Seite des in dem Laminierschritt hergestellten Laminats.

Über das zuvor beschriebene Verfahren ist ein verstärkter Formkörper herstellbar. Neben einer präzisen Fixierung der Verstärkungseinlage verfügt der Formkörper über weitere positive Eigenschaften, die über die im Stand der Technik vorhandenen Lösungen hinausgehen. So erhöht die nach Abschluss des Spritzgussprozesses an der Außenwand des Formkörpers verbliebene Schicht des Klebmittels den Schutz gegen Kerbwirkung an den Fasern der Verstärkungseinlage. Ebenso ist es möglich dem Klebemittel einen UV-Stabilisator zuzusetzen und damit die darunter befindliche Schicht des Matrixpolymers der Verstärkungseinlage vor Degradation zu schützen ohne die Rezeptur dieses Matrixpolymers selbst ändern zu müssen. Ebenso kann durch Wahl einer geeigneten Profilierung oder Rillung des Werkzeugs der am Formkörper verbleibenden Schicht des Klebmittels eine Oberflächenstrukturierung gegeben werden. Dadurch ist es möglich dem Formkörper auch an der Stelle der Verstärkungseinlage eine besondere ästhetische oder haptische Erscheinung zu geben, die sonst weitere Oberflächenbearbeitungsschritte erforderlich machen würde.

Verwendung finden die zuvor beschriebenen verstärkten Formkörper zur Herstellung von Automobilteilen, insbesondere Fahrwerksbauteile, Strukturbauteile, Armlehnen, Sitzschalen, Koppelstreben, Motorlagerungen, Lüfter, Lamellen, Interieurteile, Exterieurteile, Getriebebauteile und Felgen; sowie Industrie- und Konsumgüter, insbesondere Hebel, Druckbehälter, Werkzeugteile, Haushaltsgeräte, Sanitätsbauteile, Befestigungen, Gartengeräte, Sportgeräte, insbesondere Schuhe, Bögen, Eispickel, Schläger, Fahrradrahmen, Pedale, Helme und Protektoren.

Anhand der nachfolgenden Beispiele soll der erfindungsgemäße Gegenstand näher erläutert werden, ohne diesen auf die hier gezeigten spezifischen Ausführungsformen einschränken zu wollen.

### Eingesetzte Materialien:

### Faserbändchen

Für die Herstellung der eingesetzten Faserbändchen wurden endlose Kohlenstofffasern CF ROVING T700SC-12K-50C der Firma Toray mit 7 µm Filamentdurchmesser und einem 1%igen Epoxy-Sizing verwendet.

Das erste zur Imprägnierung verwendete Polymer enthält Polyamid 66 mit 62 Gew%, Polyamid 6I/6T (67/33) mit 32 Gew%, Schlagzähmodifikator mit 4 Gew% und weitere Additive mit 2 Gew%.

Das Faserbändchen hat folgende Eigenschaften:
- Zug-E-Modul: 49400 MPa
- Bruchspannung: 750 MPa
- Bruchdehnung : 1.5 %
- Faseranteil (Masse): 30 %
- Faseranteil (Volumen): 21 %
- Dichte: 1.28 g/cm³
- Schmelztemperatur: 260 °C

Für die Versuche wurden Faserbändchen mit folgenden 3 Dimensionen (Länge x Breite x Dicke in mm) gefertigt: 50 x 10 x 0.35 und 100 x 10 x 0.35 sowie 160 x 10 x 0.35

### Klebemittel

Das **Klebemittel A** enthält Lactam 6 37.6 mol%, Lactam 12 50.2 mol%, Adipinsäure 12.2 mol%, Hexamethylendiamin 12.2 mol%. Sein Schmelzpunkt beträgt 125 °C.

Das **Klebemittel B** enthält Lactam 6 60.0 mol%, Adipinsäure 10.0 mol%, Sebazinsäure 20.0 mol%, Dodecandisäure 10.0 mol%, Hexamethylendiamin 40.0 mol%. Sein Schmelzpunkt beträgt 110 °C.

### Zweites Polymer / Spritzgusspolymer

Als zweite zur Umspritzung verwendete Polymere wurden für die Versuche eingesetzt:
**Ein Polymer C,** enthaltend Polyamid 66 mit 35 Gew%, Polyamid 6I/6T (67/33) mit 12 Gew%, Glasfasern mit 50 Gew%, Schlagzähmodifikator mit 2 Gew% und weiteren Additiven mit 1 Gew%.

**Ein Polymer D**, enthaltend 20 Gew% Terephtalsäure, 8 Gew% Isophthalsäure, 20 Gew% Hexamethylendiamin, 50 Gew% Glasfasern und 2 Gew% weitere Additive.

### Herstellung der Probenkörper / Spritzgussbedingungen

Die Probenkörper der Versuche wurden auf einer Spritzgussmaschine Allraounder 370S der Firma Arburg verspritzt. Der Schneckendurchmesser betrug 20mm mit Schneckendüse. Zuhaltekraft Max. 700kN. Plasifiziereinheit Standard 3 Zonen-Schnecke.

Folgende Spritzgussparameter wurden eingestellt:

| **Parameter** | **Einheit** | **Polymer C** | **Polymer D** |
|---|---|---|---|
| Schneckendrehzahl | [1/min] | 150 | 150 |
| Dosierweg/Dekompression | [mm] | 86/5 | 98/2 |
| Umschaltdruck spez. | [bar] | 990 | 650 |
| Max. Einspritzdruck | [bar] | 1130 | 960 |
| Einspritzgeschwindigkeit | [mm/s] | 100 | 100 |
| Einspritzzeit | [s] | 0.81 | 0.80 |
| Nachdruck | [bar] | 800 | 800 |
| Nachdruckzeit | [s] | 17 | 17 |
| Restkühlzeit | [s] | 20 | 20 |

| **Parameter** | **Einheit** | **PolymerC** | **Polymer D** |
|---|---|---|---|
| Werkzeugtemperatur | [°C] | 120 | 140 |
| Massetemperatur | [°C] | 310 | 350 |

### Versuche

### Zugprüfung nach DIN EN ISO 527

Zugfestigkeiten der Probenkörper wurden gemäß DIN EN ISO 527 mit einer Zug-Dehnungsmaschine (Universalprüfmaschine Z100, Hersteller: Zwick/Roell) vermessen. Anfangsabstand der Klemmen betrug bei den Spritzgussprobekörpern 115 mm. Die Traversengeschwindigkeit betrug 5 mm/min. Die Messung der Zugdehnung erfolgt über zwei Greifer. Bei den verwendeten Probenkörpern handelte es sich um ISO-Zugstäbe, Norm: ISO/CD 3167, Typ A1, 170 x 20/10 x 4 mm. Die Dimension der darin eingebrachten Faserbändchen war 160 x 10 x 0.35 mm [L x B x H].

### Zug-Schertest

In Anlehnung an DIN 53 283 wurden Zug-Schertests zur Erhebung der Klebfestigkeit an einer temperierten Oberfläche durchgeführt. Dabei wurde die Klebefläche ([L x B] 50 x 10 / 100 x 10 mm), die Klebstoffart (Klebemittel A, Klebemittel B), die Klebstoffmenge (15 g/m² / 30 g/m² / 40 g/m²) und die Oberflächentemperatur (120°C / 140°C) variiert. Die Abziehgeschwindigkeit betrug 100 mm/min.

### Versatzmessung

Die Versatzmessung wurde mit einem Makroskop Leica M420 und der Bildbearbeitungssoftware IM 1000 durchgeführt. Hierbei wurde das Faserbändchen auf der Auswerferseite des Werkzeuges in die Kavität geklebt. Für die Messung des Versatzes wurde als Referenzpunkt für die Nulllinie der Auswerferstift gesetzt. Nach dem Spritzgussprozess wurde der Versatz des Faserbändchen zum Abdruck des Auswerferstifts auf dem Zugprüfkörper gemessen.

**Tabelle 1**

| **Beispiele** | **B1** | **B2** | **B3** | **B4** | **B5** | **B6** | **B7** | **B8** | **B9** | **B10** | **B11** | **VB1** | **VB2** |
|---|---|---|---|---|---|---|---|---|---|---|---|---|---|
| | | | | | | | | | | | | | |
| Menge des Klebemittels A [g/m²] | 15 | 30 | 45 | 30 | 0 | 0 | 0 | 30 | 30 | 0 | 30 | n.a. | 0 |
| Menge des Klebemittels B [g/m²] | 0 | 0 | 0 | 0 | 30 | 45 | 30 | 0 | 0 | 30 | 0 | n.a. | 0 |
| Werkzeugtemperatur bei Klebung [C°] | 120 | 120 | 120 | 120 | 120 | 120 | 120 | 140 | 120 | 120 | 140 | n.a | 100 |
| Klebmittel auf Flächen des Faserbändchen einseitig / beidseitig | einseitig | einseitig | einseitig | einseitig | einseitig | einseitig | einseitig | einseitig | beidseitig | beidseitig | einseitig | n.a | einseitig |
| Eingesetztes Spritzgusspolymer | Polymer C | Polymer C | Polymer C | Polymer C | Polymer C | Polymer C | Polymer C | Polymer C | Polymer C | Polymer C | Polymer D | Polymer C | Polymer C |
| | | | | | | | | | | | | | |
| Zug-ScherKraft [N], Länge Faserbändchen50mm | 2.3 | 4.0 | 7.3 | -- | 4.0 | 5.3 | -- | 3.3 | -- | -- | -- | -- | -- |
| Zug-ScherKraft [N], Länge Faserbändchen 100mm | -- | -- | -- | 8.3 | -- | -- | 7.5 | -- | -- | -- | -- | -- | -- |
| Zugversuch-Zugfestigkeit [N/mm²], Länge Faserbändchen 160m m | -- | 323.1 | -- | -- | 325.1 | -- | -- | -- | 272.4 | 296 | 289.1 | 256 | 247.3 |
| Messung - Versatz [mm] | 0.85 | 0.61 | 1.88 | 0.54 | 0.69 | 0.83 | 0.72 | -- | 1.17 | 0.78 | 1.67 | | 21.42 |
| Messung nicht erhoben; n.a. keine Fixierung durch Klebung; VB1 nicht verstärkter Formkörper, VB2 Verstärkter Formkörper mit verrutschtem Faserbändchen. | | | | | | | | | | | | | |

Die erfindungsgemäßen Beispiele zeigen, dass die mittels Klebung eingebrachten Verstärkungseinlagen ihre präzise Ausrichtung im Werkzeug trotz hoher Schmelzedrücke beibehalten.

Entsprechend weisen die erfindungsgemäßen Beispiele höhere Zugfestigkeiten auf als die Formkörper mit nicht fixierter Einlage in VB2, die unter dem Schmelzeeinfluss aus ihrer Position ausgelenkt werden und nicht mehr kraftflussgerecht übertragen können. Ebenso sind die erreichten Zugfestigkeiten der erfindungsgemäßen Beispiele höher als die nicht-verstärkten Formkörper in VB1.

Weiterhin zeigen die Beispiele B1-B7 und B9-11, dass der Versatz der Verstärkungseinlage sich überwiegend im µm-Bereich erstreckt und damit präziseste Verstärkungen möglich sind. Weiterhin zeigen die Beispiele B1-B11 die Eignung der Klebfixierung unter verschiedenen Randbedingungen. Die Beispiele B1-B7 zeigen, dass geringste Versatzwerte bei moderaten Klebstoffmengen um 30 g/m² erreicht werden. Die Beispiele B9- B10 zeigen, dass auch bei einer beidseitigen Auftragung des Klebemittels hohe Zugfestigkeiten erreicht werden, der Formkörper also nicht delaminiert.

## Patentansprüche

1. Verfahren zur Herstellung eines mit mindestens einem Faserbändchen verstärkten Formkörpers mit folgenden Schritten:
a) Imprägnierung eines endlosen, flachen Rovings mit einer Schmelze eines ersten thermoplastischen Polymers zu einem Faserbändchen,
b) Bereichsweise Aufbringung mindestens eines Klebemittels auf dem imprägnierten Faserbändchen mit anschließendem Schmelzen des mindestens einen Klebemittels,
c) Erkalten und Aushärten des Faserbändchens,
d) Aufheizen eines Spritzgusswerkzeugs auf eine Temperatur, die nicht niedriger als 20K unterhalb des Schmelzpunktes des Klebemittels liegt,
e) Einbringen des mindestens einen Faserbändchens in das Spritzgusswerkzeug, wobei zumindest ein Teil der mit Klebemittel beschichteten Bereiche des Faserbändchens mit mindestens einer temperierten Spritzgusswerkzeugwand in Kontakt gebracht werden,
f) Spritzgießen eines zweiten thermoplastischen Polymers in das Werkzeug,
g) Entnahme des verstärkten Formkörpers aus der Spritzgussform,
wobei das Faserbändchen als Verstärkungselement stoffschlüssig mit der Spritzgusswerkzeugwand verbunden wird, so dass beim anschließenden Spritzgießen der Polymermatrix das Verstärkungselement im Werkzeug fixiert ist.

2. Verfahren nach Anspruch 1,
**dadurch gekennzeichnet, dass** das bei der Imprägnierung in Schritt a) eingesetzte erste thermoplastische Polymer ausgewählt ist aus der Gruppe bestehend aus Polyamiden, Polyolefinen, Polyacrylaten, Polycarbonaten, Polysulfonen, Polyimiden, Polyestern, Polyethern, Polystyrole, oder Mischungen aus einem oder mehreren der aufgezählten Materialien.

3. Verfahren nach einem der vorhergehenden Ansprüche,
**dadurch gekennzeichnet, dass** das zweite thermoplastische Polymer in Schritt f) ausgewählt ist aus der Gruppe bestehend aus Polyamiden, Polyolefinen, Polyacrylaten, Polycarbonaten, Polysulfonen, Polyimiden, Polyestern, Polyethern, Polystyrole oder Mischungen aus einem oder mehreren der aufgezählten Materialien.

4. Verfahren nach Anspruch 2 oder 3,
**dadurch gekennzeichnet, dass** das für die Imprägnierung eingesetzte erste thermoplastische Polymer und/oder das für die Umspritzung eingesetzte zweite thermoplastische Polymer Zusatzstoffe enthalten-ausgewählt aus der Gruppe bestehend aus anorganischen Stabilisatoren, organischen Stabilisatoren, Gleitmitteln, Entschäumern, kettenverlängernden Additiven, Kondensationskatalysatoren, optischen Aufhellern, Weichmachern, Haftvermittlern, halogenhaltigen Flammschutzmitteln, halogenfreien Flammschutzmitteln, Schlagzähmodifikatoren, teilchenförmige Füllstoffe, Farbstoffe, Pigmente und/oder deren Mischungen enthält,

5. Verfahren nach einem der vorhergehenden Ansprüche,
**dadurch gekennzeichnet, dass** das Aufbringen des mindestens einen Klebemittels in Schritt b) durch Aufstreuen als Pulver oder durch Aufbringen einer Suspension oder durch Aufwalzen als Folie oder Faden durchgeführt wird.

6. Verfahren nach einem der vorhergehenden Ansprüche,
**dadurch gekennzeichnet, dass** das Klebemittel eine Klebewirkung erst bei Erwärmung auf nicht niedriger als 20K unterhalb des Schmelzpunktes des Klebemittels entfaltet.

7. Verfahren nach einem der vorhergehenden Ansprüche,
**dadurch gekennzeichnet, dass** das mindestens eine Klebemittel die Oberfläche des Faserbändchens, teilweise oder vollständig, an diskreten Punkten oder in geometrischen Mustern wie Streifen, Rechtecken, Rauten, Kreisen, Ovale oder in Arealen in statistischer Verteilung bedeckt.

8. Verfahren nach den vorhergehenden Ansprüchen,
**dadurch gekennzeichnet, dass** das mindestens eine Klebemittel ausgewählt ist aus der Gruppe der Copolyamide oder Copolyester.

9. Verfahren nach Anspruch 8, **dadurch gekennzeichnet, dass** das Copolyamid einen Schmelzpunkt nach ISO 11357 im Bereich von 70 °C bis 160 °C, bevorzugt von 90 °C bis 140 °C und/oder eine Schmelzviskosität bei 160 °C und einer Belastung von 2,16 kg nach ISO 1133 von 50 bis 3000 Pa*s, bevorzugt von 200 bis 2000 Pa*s aufweist und/oder dass der Copolyester einen Schmelzpunkt nach ISO 11357 im Bereich von 80 °C bis 180 °C, bevorzugt von 100 °C bis 160 °C und/oder eine Schmelzviskosität nach ISO 1133 bei 160 °C und einer Belastung von 2,16 kg von 50 bis 1500 Pa*s, bevorzugt 100 bis 1000 Pa*s aufweist.

10. Verfahren nach den vorhergehenden Ansprüchen,
**dadurch gekennzeichnet, dass** die Bedeckung, Schichtdicke, Morphologie und Adhäsionsvermögen des mindestens einen Klebemittels durch die aufgetragene Menge des Klebemittels eingestellt wird, bevorzugt von 10 bis 50 g/m², besonders bevorzugt von 15 bis 30 g/m² des Klebemittels.

11. Verfahren nach einem der vorhergehenden Ansprüche,
**dadurch gekennzeichnet, dass** vor oder nach Schritt b) eine Umformung des Faserbändchens erfolgt.

12. Verfahren nach einem der vorhergehenden Ansprüche,
**dadurch gekennzeichnet, dass** in Schritt d) das Spritzgusswerkzeug auf eine Temperatur erwärmt wird, die nicht niedriger als 20 K unterhalb der Schmelztemperatur des Klebemittels liegt, insbesondere 50 bis 200 °C, bevorzugt 70 bis 180 °C, besonders bevorzugt 90 bis 160 °C.

13. Verfahren nach einem der vorhergehenden Ansprüche,
**dadurch gekennzeichnet, dass** in Schritt e) das mindestens eine Faserbändchen unter Anlegen eines Drucks von 5 bis 30 N/cm², bevorzugt von 10 bis 20 N/cm² mit der mindestens einen temperierten Spritzgusswerkzeugwand in Kontakt gebracht wird.

14. Verfahren nach einem der vorhergehenden Ansprüche,
**dadurch gekennzeichnet, dass** der Roving aus Endlosfasern besteht, insbesondere Kohlenstoff-, Natur-, Glas-, Mineral- oder Aramidfasern, bevorzugt Kohlenstofffasern oder Glasfasern mit flachem oder rundem Querschnitt des einzelnen Filaments und besonders bevorzugt Kohlenstofffasern.

15. Verfahren nach einem der vorhergehenden Ansprüche,
**dadurch kennzeichnet, dass** zwischen dem Imprägnierschritt a) und dem Aufbringen des Klebemittels in Schritt b) mindestens 2 Faserbändchen in einer weiteren Station zu einem Laminat verbunden werden und das Aufbringen des Klebemittels in Schritt b) auf mindestens einer Seite des Laminats erfolgt.

## Claims

1. Method for the production of a moulded article reinforced with at least one fibre ribbon, having the following steps:
a) impregnation of an endless, flat roving with a melt of a first thermoplastic polymer to form a fibre ribbon,
b) application in regions of at least one adhesive on the impregnated fibre ribbon with subsequent melting of the at least one adhesive,
c) cooling and hardening of the fibre ribbon,
d) heating of an injection mould to a temperature which is not lower than 20 K below the melting point of the adhesive,
e) introduction of the at least one fibre ribbon into the injection mould, at least one part of the regions of the fibre ribbon coated with adhesive being brought in contact with at least one temperature-controlled injection mould wall,
f) injection moulding of a second thermoplastic polymer into the mould,
g) removal of the reinforced moulded article from the injection mould,
wherein the fibre ribbon is connected to the injection mould wall as a reinforcement element in a materially bonded manner, so that the reinforcement element is held in the mould during the subsequent injection moulding of the polymer matrix.

2. Method according to claim 1, **characterised in that** the first thermoplastic polymer used during the impregnation in step a) is selected from the group consisting of polyamides, polyolefins, polyacrylates, polycarbonates, polysulphones, polyimides, polyesters, polyethers, polystyrenes or mixtures of one or more of the listed materials.

3. Method according to one of the preceding claims, **characterised in that** the second thermoplastic polymer in step f) is selected from the group consisting of polyamides, polyolefins, polyacrylates, polycarbonates, polysulphones, polyimides, polyesters, polyethers, polystyrenes or mixtures of one or more of the listed materials.

4. Method according to claim 2 or 3, **characterised in that** the first thermoplastic polymer used for the impregnation and/or the second thermoplastic polymer used for the overmoulding includes additives, selected from the group consisting of inorganic stabilisers, organic stabilisers, lubricants, defoamers, chain-lengthening additives, condensation catalysts, optical brighteners, plasticisers, bonding agents, halogen-containing flame-retardants, halogen-free flame-retardants, impact modifiers, particulate fillers, dyes, pigments and/or mixtures thereof.

5. Method according to one of the preceding claims, **characterised in that** application of the at least one adhesive in step b) is implemented by scattering as powder or by applying a suspension or by rolling on as foil or thread.

6. Method according to one of the preceding claims, **characterised in that** the adhesive develops an adhesive effect only when heated to not lower than 20 K below the melting point of the adhesive.

7. Method according to one of the preceding claims, **characterised in that** the at least one adhesive covers the surface of the fibre ribbon, partially or completely, at discrete points or in geometric patterns, such as stripes, rectangles, diamonds, circles, ovals or in areas in statistical distribution.

8. Method according to the preceding claims, **characterised in that** the at least one adhesive is selected from the group of copolyamides or copolyesters.

9. Method according to claim 8, **characterised in that** the copolyamide has a melting point, according to ISO 11357, in the range of 70°C to 160°C, preferably of 90°C to 140°C, and/or a melting viscosity at 160°C and a loading of 2.16 kg, according to ISO 1133, of 50 to 3,000 Pa*s, preferably of 200 to 2,000 Pa*s, and/or **in that** the copolyester has a melting point, according to ISO 11357, in the range of 80°C to 180°C, preferably of 100°C to 160°C, and/or a melting viscosity, according to ISO 1133, at 160°C and a loading of 2.16 kg, of 50 to 1.500 Pa*s, preferably 100 to 1,000 Pa*s.

10. Method according to the preceding claims, **characterised in that** the covering, layer thickness, morphology and the adhesion capacity of the at least one adhesive is adjusted by the applied quantity of adhesive, preferably of 10 to 50 g/m², particularly preferably of 15 to 30 g/m².

11. Method according to one of the preceding claims, **characterised in that** reshaping of the fibre ribbon is effected before or after step b).

12. Method according to one of the preceding claims, **characterised in that**, in step d), the injection mould is heated to a temperature which is not lower than 20 K below the melting temperature of the adhesive, in particular 50 to 200°C, preferably 70 to 180°C, particularly preferably 90 to 160°C.

13. Method according to one of the preceding claims, **characterised in that**, in step e), the at least one fibre ribbon is brought in contact with the at least one temperature-controlled injection mould wall by applying a pressure of 5 to 30 N/cm², preferably of 10 to 20 N/cm².

14. Method according to one of the preceding claims, **characterised in that** the roving consists of endless fibres, in particular carbon-, natural-, glass-, mineral- or aramide fibres, preferably carbon fibres or glass fibres with a flat or round cross-section of the individual filament and particularly preferably carbon fibres.

15. Method according to one of the preceding claims, **characterised in that**, between the impregnation step a) and application of the adhesive in step b), at least 2 fibre ribbons are joined to form a laminate in a further station and application of the adhesive is effected, in step b), on at least one side of the laminate.

## Revendications

1. Procédé de fabrication d'un objet moulé renforcé par au moins une bandelette de fibres, comportant les étapes suivantes :
a) imprégnation d'un stratifil plat continu avec une masse fondue d'un premier polymère thermoplastique, pour obtenir une bandelette de fibres,
b) application par zones d'au moins un adhésif sur la bandelette de fibres imprégnée, puis fusion de l'au moins un adhésif,
c) refroidissement et durcissement de la bandelette de fibres,
d) chauffage d'un moule d'injection à une température qui n'est pas de moins de 20 K inférieure au point de fusion de l'adhésif,
e) introduction de l'au moins une bandelette de fibres dans le moule d'injection, au moins une partie des zones de la bandelette de fibres revêtues de l'adhésif étant mises en contact avec au moins une paroi, portée à l'équilibre de température, du moule d'injection,
f) moulage par injection, dans le moule, d'un deuxième polymère thermoplastique,
g) extraction de l'objet moulé renforcé du moule d'injection,
dans lequel la bandelette de fibres est reliée en tant qu'élément de renforcement à la paroi de moule d'injection par liaison de matière, de sorte que lors du moulage par injection ultérieur de la matrice polymère, l'élément de renforcement est fixé dans le moule.

2. Procédé selon la revendication 1, **caractérisé en ce que** le premier polymère thermoplastique utilisé lors de l'imprégnation de l'étape a) est choisi dans le groupe consistant en les polyamides, les polyoléfines, les polyacrylates, les polycarbonates, les polysulfones, les polyimides, les polyesters, les polyéthers, les polystyrènes, ou les mélanges d'un ou plusieurs des matériaux cités.

3. Procédé selon l'une des revendications précédentes, **caractérisé en ce que** le deuxième polymère thermoplastique de l'étape f) est choisi dans le groupe consistant en les polyamides, les polyoléfines, les polyacrylates, les polycarbonates, les polysulfones, les polyimides, les polyesters, les polyéthers, les polystyrènes, ou les mélanges d'un ou plusieurs des matériaux cités.

4. Procédé selon la revendication 2 ou 3, **caractérisé en ce que** le premier polymère thermoplastique utilisé pour l'imprégnation et/ou le deuxième polymère thermoplastique utilisé pour le surmoulage contiennent des additifs choisis dans le groupe consistant en les stabilisants inorganiques, les stabilisants organiques, les lubrifiants, les antimoussants, les additifs prolongateurs de chaîne, les catalyseurs de condensation, les azurants optiques, les plastifiants, les promoteurs d'adhérence, les agents ignifuges halogénés, les agents ignifuges non halogénés, les modifiants choc, les charges particulaires, les colorants, les pigments et/ou les mélanges de ceux-ci.

5. Procédé selon l'une des revendications précédentes, **caractérisé en ce que** l'application de l'au moins un adhésif de l'étape b) est réalisée par saupoudrage sous forme de poudre ou par application d'une suspension ou par plastification sous forme d'une feuille ou d'un fil.

6. Procédé selon l'une des revendications précédentes, **caractérisé en ce que** l'adhésif ne déploie un effet d'adhérence qu'après chauffage à une température qui n'est pas moins de 20 K inférieure au point de fusion de l'adhésif.

7. Procédé selon l'une des revendications précédentes, **caractérisé en ce que** l'au moins un adhésif recouvre la surface de la bandelette de fibres, en partie ou en totalité, en des points discrets ou selon des motifs géométriques tels que des bandes, des rectangles, des losanges, des cercles, des ovales, ou dans des domaines à répartition statistique.

8. Procédé selon les revendications précédentes, **caractérisé en ce que** l'au moins un adhésif est choisi dans le groupe des copolyamides ou des copolyesters.

9. Procédé selon la revendication 8, **caractérisé en ce que** le copolyamide présente un point de fusion selon ISO 11357 compris dans la plage de 70 °C à 160 °C, de préférence de 90 °C à 140 °C, et/ou une viscosité à l'état fondu à 160 °C et sous une charge de 2,16 kg selon ISO 1133 de 50 à 3000 Pa.s, de préférence de 200 à 2000 Pa.s, et/ou que le copolyester présente un point de fusion selon ISO 11357 compris dans la plage de 80 °C à 180 °C, de préférence de 100 °C à 160 °C, et une viscosité à l'état fondu selon ISO 1133 à 160 °C et sous une charge de 2,16 kg de 50 à 1500 Pa.s, de préférence de 100 à 1000 Pa.s.

10. Procédé selon les revendications précédentes, **caractérisé en ce que** le taux de recouvrement, l'épaisseur de couche, la morphologie et le pouvoir adhésif de l'au moins un adhésif sont ajustés par la quantité appliquée de l'adhésif, de préférence de 10 à 50 g/m², d'une manière particulièrement préférée de 15 à 30 g/m² de l'adhésif.

11. Procédé selon l'une des revendications précédentes, **caractérisé en ce qu'**on procède, avant ou après l'étape b), à une transformation de la bandelette de fibres.

12. Procédé selon l'une des revendications précédentes, **caractérisé en ce que**, dans l'étape d), on chauffe le moule d'injection à une température qui n'est pas moins de 20 K inférieure à la température de fusion de l'adhésif, en particulier de 50 à 200 °C, de préférence de 70 à 180 °C, d'une manière particulièrement préférée de 90 à 160 °C.

13. Procédé selon l'une des revendications précédentes, **caractérisé en ce que**, dans l'étape e), on met en contact l'au moins une bandelette de fibres, par application d'une pression de 5 à 30 N/cm², de préférence de 10 à 20 N/cm², avec l'au moins une paroi de moule d'injection portée à l'équilibre de température.

14. Procédé selon l'une des revendications précédentes, **caractérisé en ce que** le stratifil est constitué de fibres continues, en particulier de fibres de carbone, naturelles, de verre, minérales ou aramides, de préférence de fibres de carbone ou de fibres de verre ayant une section transversale plate ou circulaire du filament individuel et d'une manière particulièrement préférée de fibres de carbone.

15. Procédé selon l'une des revendications précédentes, **caractérisé en ce que**, entre l'étape d'imprégnation a) et l'application de l'adhésif de l'étape b), on assemble dans une station supplémentaire au moins deux bandelettes de fibres pour obtenir un stratifié, l'application de l'adhésif de l'étape b) s'effectuant sur au moins une face du stratifié.
